# EUROPEAN PATENT APPLICATION

(11) **EP 4 611 227 A1**
(43) Date of publication of application: **03.09.2025**
(21) Application number: 25157246.7
(22) Date of filing: 11.02.2025
(51) Int. Cl.: H02K 3/52

(54) **STATOR FOR ELECTRIC MOTOR**

(30) Priority: 27.02.2024 DE 102024105465
(71) Applicant: VALEO EMBRAYAGES, 80009 Amiens (FR)
(72) Inventor: MERKEL, Manuel, 96106 Ebern (DE); GEGNER, Patrick, 96106 Ebern (DE); STOESSEL, Roland, 96106 Ebern (DE); SAUTER, Anton, 96106 Ebern (DE)
(74) Representative: Valeo Powertrain Systems

(57) **Abstract**

The invention relates to a stator (10) for an electric motor, comprising a stator core (12) with a plurality of teeth (14), a coil (22) for each tooth (14), and a coil carrier (18) which is arranged on the stator core (12), wherein the coil carrier (18) has a plurality of guide grooves for a winding wire (24) which forms the coils (22), and three receptacles (30) for connection contacts (32), which extend in the axial direction of the stator (10) and lie within the ring-shaped outer contour of the coil carrier (18), wherein a connection contact (32) is arranged in each receptacle (30) and is electrically connected to the winding wire (24).

## Description

The invention relates to a stator for an electric motor, comprising a stator core, with a plurality of teeth, a coil for each tooth, and a coil support, which is arranged on the stator core.

Conventional stators usually have a stator core and a plurality of stator windings, which are also referred to as coils. Each coil is assigned here to a tooth that extends on the inside of the stator core. The stator also has a coil carrier that is mounted on a side or an opening of the stator core.

In conventional stators, a projection extends outwards from the stator core in the radial plane, forming a kind of balcony. Connection contacts for the coils of the stator are arranged on this projection, for example the three connection contacts U, V and W that are normally used.

The projection extending radially outwards increases the diameter of the stator. This is particularly critical if the electric motor is to be accommodated in tight installation spaces, for example in a pump module that is to be mounted in an oil pan of an electric axle for a motor vehicle.

Accordingly, it is an object of the invention to provide a stator for an electric motor that requires less installation space in the radial direction.

According to the invention, this object is achieved by a stator for an electric motor, comprising a stator core with a plurality of teeth, one coil per tooth, and a coil carrier which is arranged on the stator core. Here, the coil carrier has a plurality of guide grooves for a winding wire that forms the coils. The coil carrier also has three receptacles for connection contacts, which extend in the axial direction of the stator and lie within the ring-shaped outer contour of the coil carrier. A connection contact is arranged here in each receptacle and is electrically connected to the winding wire. As the connection contacts can be mounted in the axial direction and within the contour of the stator, the dimensions of the stator in the radial direction are small. In particular, no additional installation space is required in the radial direction for the connection contacts. The guide grooves ensure that the winding wire is reliably guided between the coils and the connection contacts.

Preferably, the coils are formed by a single, continuous winding wire. This makes it possible to wind all coils immediately one after the other with the continuous winding wire without having to attach a new wire in between. This reduces cycle times and therefore production costs.

According to a preferred embodiment, the winding wire extends from each connection contact to exactly one coil on the inside of the coil carrier; otherwise it is guided on the outside of the coil carrier between the connection contacts and the coils. In this way, the winding wire can be routed largely without crossing points, which contributes to a compact design.

The connection contacts can be insulation-displacement connectors with two adjacent contact slots, which are inserted into the receptacles after the winding of the winding wire has been completed and contact the portion of the winding wire deposited there.

Preferably, the receptacles are provided with a guide protrusion, which is arranged between the contact slots. When winding the coils, the guide protrusion makes it possible to place the winding wire in the region of the receptacles so that it can be reliably contacted by the insulation-displacement connectors.

According to one embodiment, the receptacles are assigned guide blocks for the winding wire, which are arranged on the outside of the coil carrier. The guide blocks help to guide the winding wire to and from the receptacles for the insulation-displacement connectors in the desired manner.

Preferably, guide channels for the winding wire are arranged on the outside of the coil carrier and run in the circumferential direction. The guide channels are used to reliably guide the winding wire and prevent accidental contact between different portions of the winding wire, in particular to prevent the wires from rubbing against each other.

Further advantages and features of the invention can be found in the following description and the drawings, to which reference is made. In the drawings:
- Figure 1 shows a stator according to the invention in a perspective view;
- Figure 2 shows the stator of Figure 1 in a plan view;
- Figure 3 shows the stator of Figure 1 in a bottom view;
- Figure 4 shows the stator of Figure 1 in a side view;
- Figure 5 shows a section along the plane V-V of Figure 2;
- Figure 6 shows a section along the plane VI-VI of Figure 2;
- Figure 7 shows a section along the plane VII-VII of Figure 2;
- Figure 8 shows a section along the plane VIII-VIII of Figure 4;
- Figure 9 schematically shows a winding and connection diagram of the coils of the stator of Figures 1 to 8.

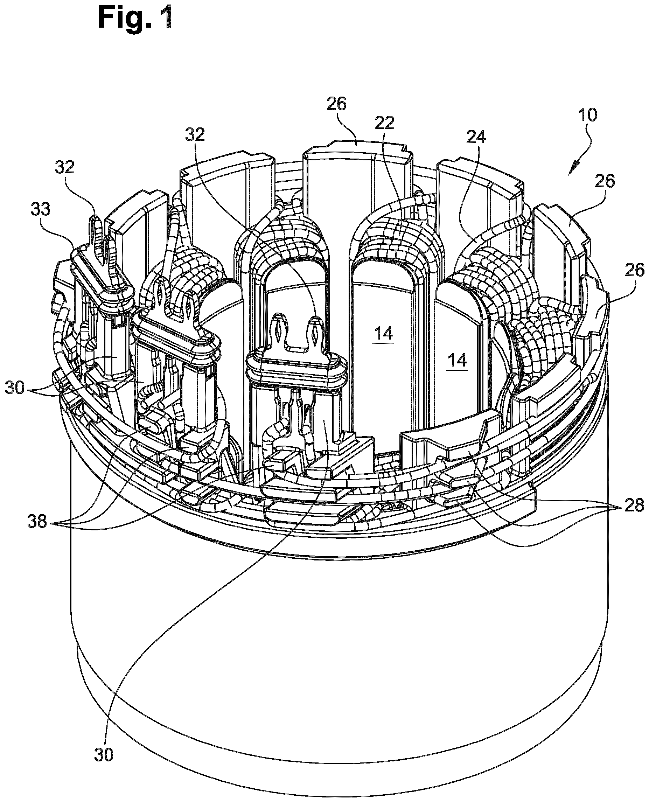

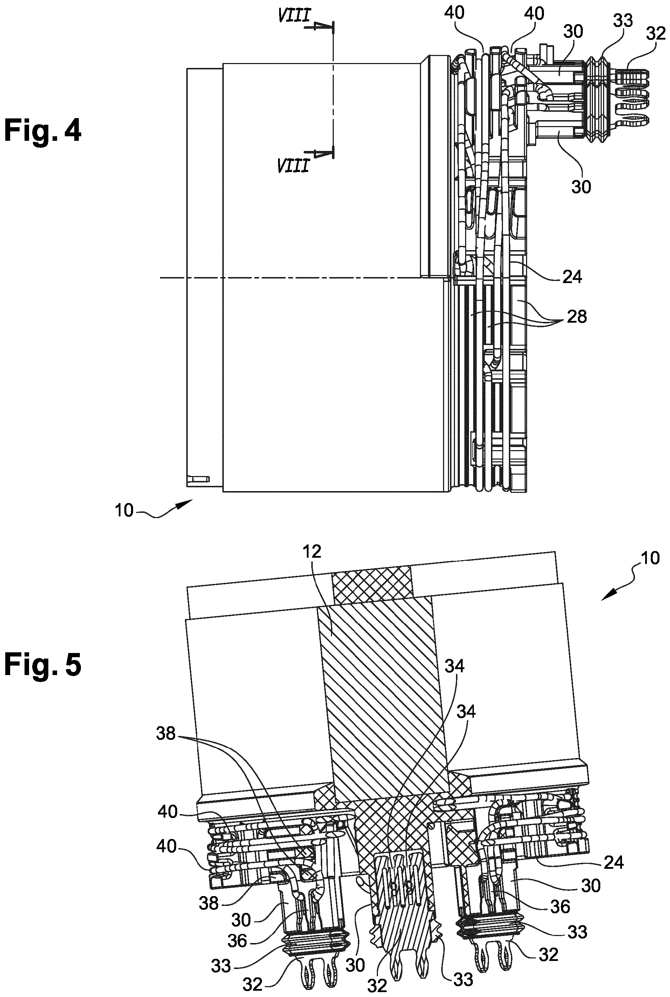

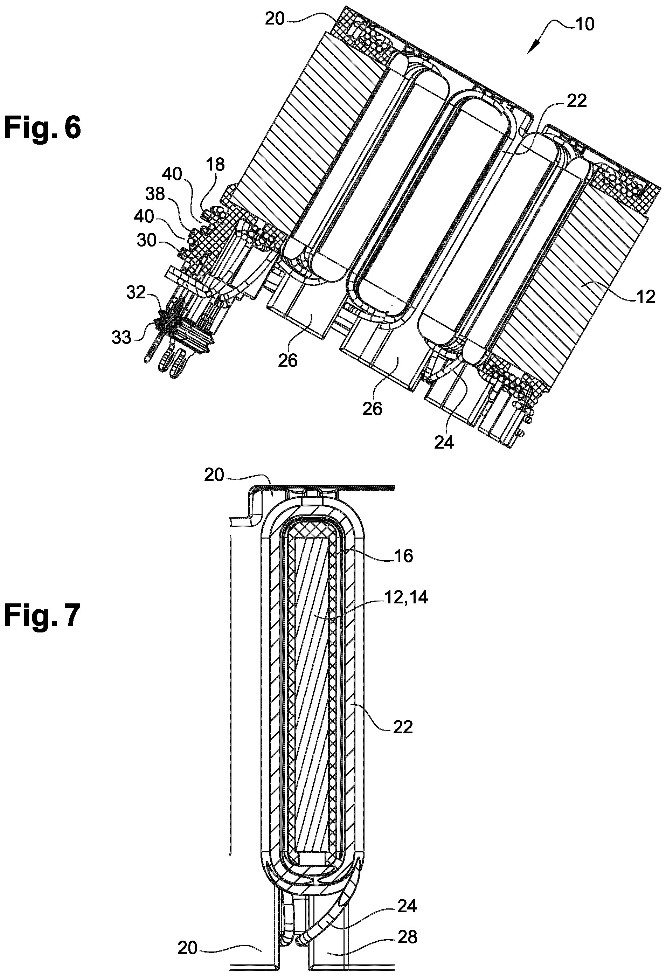

Figures 1 to 8 show a stator 10 for an electric motor. In particular, the electric motor can be a brushless electric motor that is used to drive a compact hydraulic pump. For example, the hydraulic pump can be used to supply oil to an electric drive motor for a motor vehicle, for example to cool it, or to supply oil to a gearbox to lubricate it. The electric motor can also be used to suck oil from an electric machine of an electric axle after it has cooled the winding heads of the electric machine.

The stator 10 has a stator core 12, which usually consists of layered metal sheets. The stator core 12 forms a plurality of teeth 14 on the inside of the stator.

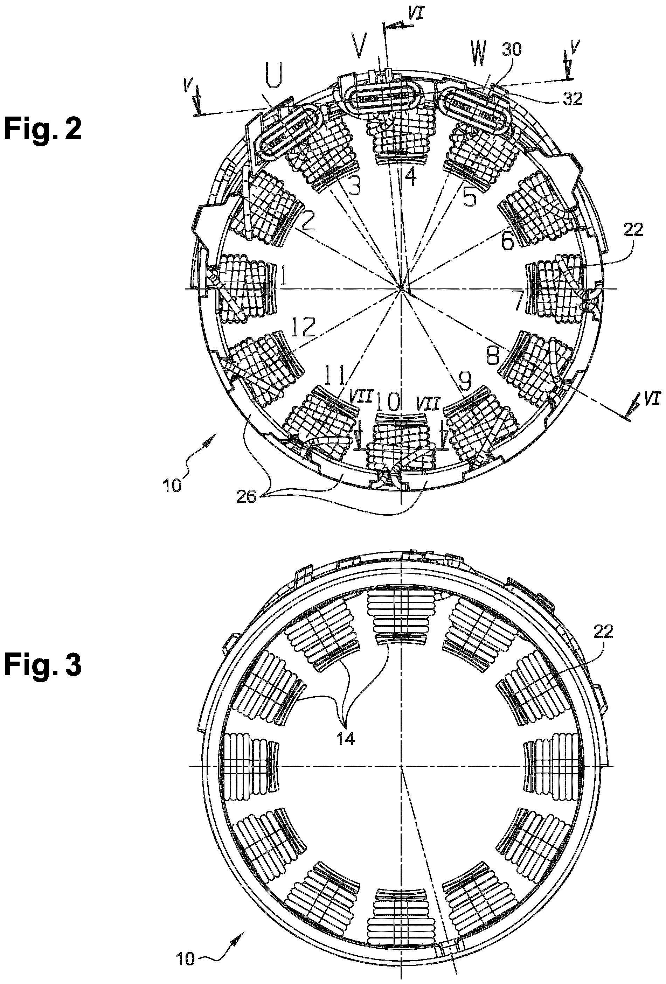

In the exemplary embodiment shown, there are twelve teeth 14. These are numbered in Figure 2.

The stator core 12 can be encapsulated with a casing 16 made of a plastics material.

A coil carrier 18 is attached to one end face of the stator core 12. It can be moulded onto the stator core 12. The coil carrier 18 is located on the side on which the electrical connections (explained later) are located.

A counterpart 20 is arranged on the opposite side of the coil carrier 18.

The coil carrier 18 and the counterpart 20 are made of plastic. They can be formed in one piece with the casing 16 of the teeth 14.

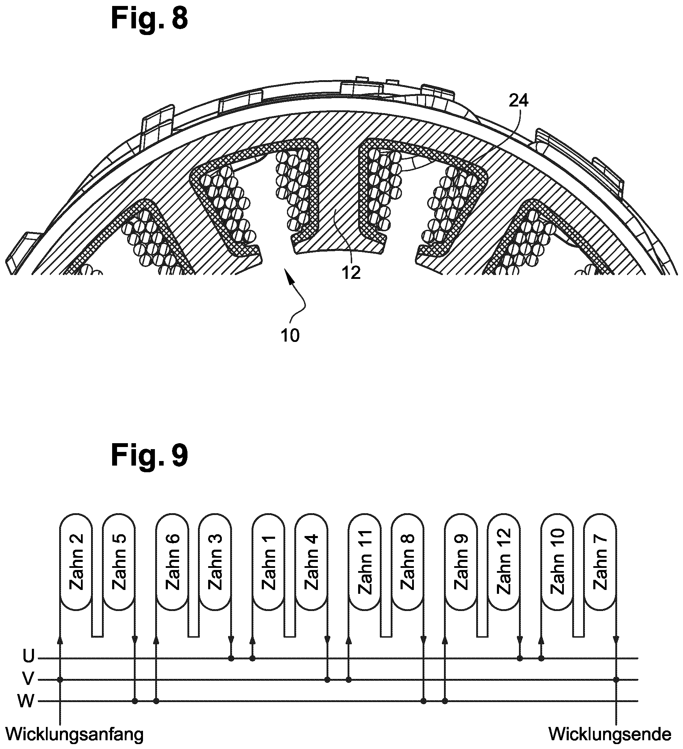

A coil 22 is arranged around each tooth 14. All twelve coils of the stator are wound with a continuous winding wire 24 (see also Figure 9).

The winding wire 24 is guided between the different coils 22 exclusively on the side of the coil carrier 18. The coil carrier 18 has various guide designs for this purpose.

On the one hand, the coil carrier 18 has a plurality of carrier blocks 26 extending in the axial direction, each of which is assigned to a space between adjacent teeth 14 (see in particular Figure 2).

Between adjacent carrier blocks 26 there is a free space, through which the winding wire 24 can be guided from the inside to the outside.

A plurality of guide ribs 28 are provided on the outside of the carrier blocks 26, so that a guide channel for the winding wire 24 is formed between adjacent guide ribs 28.

The coil carrier 18 is also provided with three receptacles 30, which extend in an axial direction relative to the centre axis of the stator core 12. Each of the receptacles 30 is intended to accommodate a connection contact 32, which also extends in an axial direction.

Each connection contact 32 is designed here as an insulation-displacement connector with two adjacent contact slots 34.

According to an alternative embodiment, it is envisaged that the connection contacts are formed as solder contacts.

A rubber seal 33 is arranged between the receptacle 30 and the free end of each connection contact 32.

Each receptacle 30 is provided with a guide projection 36, so that two contact channels corresponding to the contact slots 34 of the connection contacts 32 are formed within the receptacle.

A plurality of guide blocks 38 are also provided on the outside of the coil carrier 18 in the region of the receptacles. These are used to guide the winding wire in a precise manner in the region of the receptacles.

Since a single, continuous winding wire 24 is used, the various coils 22 can be wound in immediate succession without having to interrupt and restart the process. The start and end of the winding are assigned to the connection contact V, while the winding wire 24 runs through the region of the connection contacts U, W.

The coils 22 for the teeth 3, 4 and 5 extend at one end on the inside of the corresponding receptacle 30 from the receptacle towards the coil, while the other end of the corresponding coil winding is guided directly on the coil carrier 18 between the receptacles 30 or between the receptacle 30 and the adjacent carrier block 26 on the outside of the coil carrier 18.

The guide blocks 38 guide the winding wire towards or away from the corresponding receptacle, and the guide channels formed by the guide ribs 28 guide the winding wire 24 on the outside of the support blocks 26 towards and away from the corresponding coil.

The winding wire 24 is guided on the outside of the coil carrier 18 to the receptacles 30, where it is looped to the inside and immediately returned to the outside and then continued to the next coil. Thus, in the region of the receptacles 30 for the connection contacts U, W, there is one wire that runs on the inside of the corresponding receptacle 30 and three wires that run on the outside. In the region of the centre receptacle 30, where the winding wire begins and ends and which is assigned to the connection contact V, there are two wires that extend on the outside, as well as a wire that extends on the inside directly to the coil of the tooth 4, and a wire that is guided from the inside of the receptacle 30 around it to the outside.

Overall, this results in a winding wire 24 that has few crossing points and is therefore compact in the radial direction.

When winding the coils, the winding wire 24 is held in the corresponding receiving slot of the receptacles 30 until all the coils have been wound and the end of the winding wire 24 is guided back to the connection V. The connection contacts 32 are then pushed into the receptacles 30 so that the insulation-displacement channels make contact with the winding wire 24.

Figure 9 schematically shows a possible winding of the coils 22 and the course of the winding wire 24. For the sake of simplicity, the different receptacles are referred to here as W-receptacle, V-receptacle and U-receptacle.

Winding of the coils begins when the start of the winding wire 24 is placed in a contact channel of the V-receptacle. From there, the winding wire is guided on the outside of the coil carrier 18 in guide channels 40 to the tooth 2, guided between two carrier projections 26 to the inside of the spool carrier 18 and wound to the spool of the tooth 2.

The winding wire is then guided between two carrier projections 26 back to the outside of the coil carrier 18, where it is guided on the outside of the coil carrier 18 in guide channels 40 to the tooth 5, where it is guided between two carrier projections 26 to the inside of the coil carrier 18.

After the coil of tooth 5 is wound, the winding wire 24 is guided on the inside of the coil carrier 18 to the W-receptacle 30, where it is guided through a contact channel to the outside of the coil carrier 18 and from there on to the tooth 6 on the outside of the coil carrier 18.

The winding wire 24 is guided from the tooth 6 to the tooth 3 on the outside of the coil carrier 18.

After the coil of the tooth 3 has been wound, the winding wire 24 is guided on the inside of the coil carrier 18 to the U-receptacle 32 and then on to the tooth 1 through a contact channel on the outside of the coil carrier 18.

The winding wire 24 is guided from the tooth 1 to the tooth 4 on the outside of the coil carrier 18.

After the coil of the tooth 4 is wound, the winding wire 24 is guided on the inside of the coil carrier 18 to the V-receptacle 32 and then on to the tooth 11 through a contact channel on the outside of the coil carrier 18.

The winding wire 24 is guided from the tooth 11 to the tooth 8 on the outside of the coil carrier 18.

After the coil of the tooth 8 is wound, the winding wire 24 is guided on the outside of the coil carrier 18 to the W-receptacle 32, through the first contact channel to the inside of the receptacle and through the second contact channel back to the outside of the W-receptacle 32. The winding wire 24 therefore arrives on the outside of the coil carrier 18, makes a loop through the W-receptacle and continues on the outside of the coil carrier 18.

Alternatively, the winding wire 24 can be guided from the outside of the coil carrier 18 at the W-receptacle 32 to the inside of the coil carrier 18 and then from the inside through the contact channel back to the outside of the W-receptacle 32.

The coils of the teeth 9 and 12 are then wound.

From the tooth 12, the winding wire 24 is guided on the outside of the coil carrier 18 to the U-shaped receptacle, where it makes a loop through the two adjacent contact channels and is guided on the outside of the coil carrier 18 to the tooth 10 and then on to the tooth 7.

Here too, as an alternative to the loop, with which the winding wire is guided from the outside to the inside through one contact channel and back to the outside through the second contact channel, the winding wire can be guided to the inside at the U-receptacle and there through a contact channel to the outside.

Lastly, the winding wire 24 is guided on the outside of the coil carrier 18 back to the V-receptacle, where it is deposited in a contact channel coming from the outside.

Lastly, the connection contacts are inserted into the receptacles 32, where they make electrical contact with the connection wire 24.

By guiding the winding wire 24 in the guide channels 40, which extend in the circumferential direction around the coil carrier 18, not only can the radial expanse of the stator 10 be reduced, but the number of wires at the connection contacts 32 can also be reduced.

## Claims

1. Stator (10) for an electric motor, comprising a stator core (12) with a plurality of teeth (14), one coil (22) per tooth (14), and a coil carrier (18) which is arranged on the stator core (12), wherein the coil carrier (18) has a plurality of guide grooves for a winding wire (24) which forms the coils (22), and three receptacles (30) for connection contacts (32), which extend in the axial direction of the stator (10) and lie within the ring-shaped outer contour of the coil carrier (18), wherein a connection contact (32) is arranged in each receptacle (30) and is electrically connected to the winding wire (24).

2. Stator (10) according to claim 1, **characterized in that** the coils (22) are formed by a single, continuous winding wire (24).

3. Stator (10) according to one of claims 1 and 2, **characterized in that**, starting from each connection contact (32), the winding wire (24) extends to exactly one coil (22) on the inside of the coil carrier (18) and is otherwise guided on the outside of the coil carrier (18) between the connection contacts (32) and the coils (22).

4. Stator (10) according to one of the preceding claims, **characterized in that** the connection contacts (32) are insulation-displacement connectors with two adjacent contact slots (34).

5. Stator (10) according to claim 4, **characterized in that** the receptacles (30) are provided with a guide projection (36) which is arranged between the contact slots (34).

6. Stator (10) according to one of the preceding claims, **characterized in that** the receptacles (30) are assigned guide blocks (38) for the winding wire (24), which are arranged on the outside of the coil carrier (18).

7. Stator (10) according to one of the preceding claims, **characterized in that** guide channels (40) for the winding wire (24) are arranged on the outside of the coil carrier (18) and extend in the circumferential direction.
